# EUROPEAN PATENT APPLICATION

(11) **EP 1 091 311 A2**
(43) Date of publication of application: **11.04.2001**
(21) Application number: 00660174.4
(22) Date of filing: 02.10.2000
(51) Int. Cl.: G06F 17/60

(54) **System and method for ordering a taxi**

(30) Priority: 04.10.1999 FI 992139
(71) Applicant: First Hop Oy, 02150 Espoo (FI)
(72) Inventor: Koponen, Petteri, FIN-02160 Espoo (FI); Räsänen, Juhana, 02710 Espoo (FI)
(74) Representative: Brax, Matti Juhani

(57) **Abstract**

According to the invention, the user can order a taxi to the desired address by sending a predetermined destination identifier to the taxi ordering system. The taxi ordering system receives the message, finds out the sender of the message and separates the destination identifier from the received message. After this, the taxi ordering system retrieves by means of the sender information and identifier from its database an address defined by the sender and corresponding to the identifier. After this, the address is transmitted to one or more taxis. The address can be transmitted in many different ways. For example, an employee of the taxi ordering centre can transmit the address to the taxis by some prior art method, such as a speech transmitting radio connection or a special message transmission system. In the most advantageous manner, the address retrieved by the taxi ordering system is automatically forwarded directly to one or more taxis by means of the taxi message transmission system.

## Description

### THE OBJECT OF THE INVENTION

The invention relates to systems used for ordering a taxi. In particular, the invention relates to a taxi ordering system according to the preamble of Claim 1.

### DESCRIPTION OF THE TECHNICAL BACKGROUND

According to the prior art, a taxi is ordered by telephoning the taxi driver, taxi rank or taxi centre. Telephoning the taxi rank has the drawback that all the cars of the taxi rank may be in traffic, in which case the telephone call is not answered. The taxi centre again is often busy, especially at the times when a taxi is typically needed, like in the evenings of the weekend or in the workday mornings. At those times, the caller may have to wait for a long time for an employee of the taxi centre to answer and to forward the order to the taxis. While waiting for the answer it is difficult to do anything else, which is especially harmful, because a taxi is often needed in hasty situations. After the order has been forwarded, the orderer must wait for the arrival of the taxi, which may also take long in the rush hours.

Various automated systems are also known. In a known system, the orderer can call the automatic telephone system of the taxi centre and key in his or her identification number, whereafter the taxi arrives at the home address of the caller. This is especially suitable for companies, and it makes it easy to order a taxi at the main door of the company. However, this system is not very flexible.

The published application DE 4019890 brings forward a taxi ordering system, by which the user orders a taxi by keying in the desired destination to the terminal of the system. A system like this enables a common ride for several customers when they have the same destination. A system like this also enables centralized collection of driving information and billing. This system has the drawback that a special taxi ordering terminal is needed for it.

The published international application WO 98/20309 discloses an arrangement where a caller is identified by the telephone number from which he makes the order call. The ordering system retrieves the caller's address from an address database or receives an explicitly given address from the caller in association with the order call. The system is additionally capable of translating addresses into more generally defined geographical locations and of finding a taxi the current geographical location of which is conveniently close to the place into which a taxi was ordered and which is even moving already into the correct direction.

Other at least partly automated methods and arrangements for ordering taxis are known from publications FR 2 703 200, GB 2 261 977 and JP 09321882.

### SHORT DESCRIPTION OF THE INVENTION

It is an objective of the invention to provide a taxi ordering system, which substantially reduces the time required for ordering a taxi. Another objective of the invention is to provide a taxi ordering system, by which the orderer need not wait for an answer from the taxi centre on the telephone even in the busy times. Yet another objective of the invention is to provide a system, which reduces the time between the ordering and arrival of the taxi. Furthermore, it is an objective of the invention to provide a taxi ordering system, which reduces the time required for the reception of the order. In addition, it is an objective of the invention to provide a taxi ordering system, by which the taxi centre can forward the orders more efficiently than in the prior art solutions. It is also an objective of the invention to provide a system, which makes sure that the orderer cannot give a faulty address by mistake.

The objectives are achieved by implementing a taxi ordering system, in which the user can transmit the taxi order by means of an essentially text-based message, in which message the identifier of the order destination is mentioned. The system also comprises means for specifying identifiers, whereby the user can add to the system a desired number of his most common order destinations, and specify the corresponding identifiers.

The system according to the invention is characterized in what is set forth in the characterizing part of the independent claim concerning the system. The server unit according to the invention is characterized in what is set forth in the characterizing part of the independent claim concerning the server unit. The method according to the invention is characterized in what is set forth in the characterizing part of the independent claim concerning the method. The program product according to the invention is characterized in what is set forth in the characterizing part of the independent claim concerning the program product. The subclaims describe other preferred embodiments of the invention.

According to the invention, the user can order a taxi to the desired address by sending a predetermined destination identifier to the taxi ordering system. The taxi ordering system receives the message, finds out the sender of the message and separates the destination identifier from the received message. After this, the taxi ordering system retrieves from its database, by means of the sender information and identifier, an address defined by the sender and corresponding to the identifier. After this, the address is forwarded to one or more taxis. The address can be forwarded in many different ways. For example, an employee of the taxi ordering centre can forward the address to the taxis by some prior art method, such as a speech transmitting radio connection or a special message transmission system. In the most advantageous manner, the address found out by the taxi ordering system is automatically transmitted directly to one or more taxis by means of the taxi message transmission system.

The taxi ordering system preferably returns an acknowledgement to the user, when the taxi ordering system has found out the address of the order destination. If the taxi ordering system is connected to the taxi message transmission system, the taxi ordering system preferably returns an acknowledgement when one of the taxis, which received the order message, notifies that it will handle the order. If the taxi ordering system does not recognize the destination identifier given by the user or if the user has not defined the destination identifiers, the taxi ordering system preferably returns an error message to the user.

The user may be connected to the taxi ordering system in many different ways, such as text messages used in mobile communication systems, e-mail, Internet pages, a WAP (Wireless Application Protocol) connection or a two-way paging system. In all these connecting methods, the user can send the order without having to remain waiting for a reaction to the order from the ordering centre, as is traditional telephone orders.

When the identifiers of the destinations have been defined in advance, the user can specify the desired destination quickly, with a very short message. For example, when the text messages of mobile communication systems are used, the user only needs to send a text message (SMS, Short Message Service) to the telephone number of the taxi ordering system, the text message containing only the identifier of the desired destination, such as "HOME" or "WORK". This is an advantage especially when using mobile stations, because writing long messages on the numerical keypad of a typical mobile station is very slow. Specifying the identifiers also provides the advantage that the exact definition of the address can be checked already when the identifier is being specified, whereby problems caused by faulty ordering addresses no more occur when the actual order is made. The user can advantageously define the desired number of destinations and give them any identifiers.

### SHORT DESCRIPTION OF THE FIGURES

In the following, the invention will be described in more detail with reference to the examples of preferred embodiments and the accompanying drawings, in which
Figure 1 illustrates the structure of a system according to a preferred embodiment of the invention,
Figure 2 illustrates the structure of a server according to a preferred embodiment of the invention, and
Figure 3 illustrates a method according to a preferred embodiment of the invention.

The same reference numbers and markings are used for corresponding parts in the figures.

### DETAILED DESCRIPTION OF PREFERRED EMBODIMENTS OF THE INVENTION

### A. A FIRST SET OF PREFERRED EMBODIMENTS OF THE INVENTION

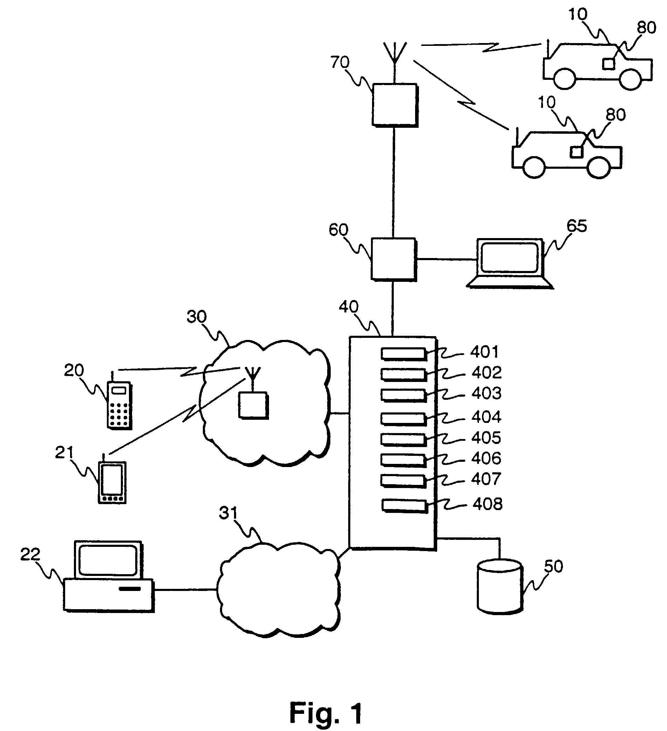

Fig. 1 illustrates the structure of a system according to a preferred embodiment of the invention. Fig. 1 shows examples of users' terminal devices 20, 21, 22, which may be mobile stations 20, PDA (Personal Digital Assistant) devices 21 or computers 22, for instance. A terminal device may also be a two-way pager, for example. The user can transmit messages to the taxi ordering system 40 by means of the wireless telecommunication network 30, such as a mobile communication system 30 or a two-way paging system 30, or a fixed telecommunication network, such as the Internet 31. Fig. 1 also shows a storage element, such as a database 50 for saving user information, identifiers and address information corresponding to the identifiers. According to this embodiment, the taxi ordering system 40 is connected to the taxi communication system 60, 65, 70, 80. In this example, the taxi communication system comprises a control unit 60, a terminal 65 of an employee of the taxi centre, a radio connection device 70 and vehicle terminals 80 located in the taxis 10. An employee of the taxi centre can forward the orders received by telephone to the taxis 10 by inputting them to the communication system by means of the terminal 65.

In the example of Fig. 1, the taxi ordering system 40 and the control unit 60 of the taxi communication system are shown as separate units. However, it is clear to a person skilled in the art that the functionality of both units can also be implemented by one unit, e.g. one computer system, which includes the program elements that produce the functionality of the above mentioned units.

According to the invention, the user can use his or her terminal device 20, 21, 22 to send to the taxi ordering system 40 an order message, in which the user mentions an identifier of the desired destination. The taxi ordering system 40 receives the message, recognizes the identifier from it, and by means of the sender information and identifier of the message retrieves from the database 50 the address given by the user. In the next step, the taxi ordering system 40 transmits the address to the control unit 60 of the taxi communication system, which forwards the address to the taxis by means of the wireless vehicle terminal system 70, 80 of the taxis. One of the taxis in the vicinity of the address at the moment or coming close to the address acknowledges the message and notifies the control unit 60 that it will handle the order. As a response to the reception of the acknowledgement, the central unit 60 notifies the taxi ordering system 40 that a taxi has acknowledged the order. The central unit 60 may also notify the identifying information of the acknowledgement, such as the identification number or the taxi, which made the acknowledgement, to the taxi ordering system 40. After this, the taxi ordering system 40 notifies the user that the order was accomplished. If the central unit 60 gave the identifying information of the acknowledgement to the taxi ordering system, this may also give this information to the user.

As it was described above, the user may be connected to the taxi ordering system in many different ways. The user may be connected to the system by means of a communication system, which transmits short messages, such as text messages of a mobile communication network, messages of two-way paging systems or e-mail messages, for instance. The system according to the invention preferably answers the user's message by using the same mechanism by which the user sent the message. For example, when using a mobile station the user can send a text message "HOME" to the telephone number of the taxi ordering system, and the system preferably answers this message by an acknowledgement message, which may be of the form "TAXI BY THE ORDER NUMBER 132 COMING TO THE ADDRESS MANNERHEIMINTIE 67 B, HELSINKI", for example. The user can also send a message with the same contents by e-mail to the e-mail address of the taxi ordering system, to which the taxi ordering system preferably answers by sending an acknowledgement message to the e-mail address, from which the user sent the message.

The order acknowledgement message may also include other pieces of information, which are useful for the orderer, such as information about the estimated minimum time to the arrival of the taxi as estimated on the basis of the order load and traffic situation at the moment.

The user can also register with the taxi ordering system and add, edit and remove destination identifiers by means of such messages. For example, the user may register to the service by sending to the taxi ordering system a message "REG SMITH HARRY", and having received the message, the taxi ordering system can create in the database 50 or the like a record for saving the user information.

The user can add identifiers e.g. by the message "NEW HOME MANNERHEIMINTIE 67 B, HELSINKI". In this message, the first character string is the command word NEW, which informs the taxi ordering system that the user wants to define a new identifier. The next character string in the message is HOME, which indicates the identifier that the user wants to define. The rest of the message specifies the address corresponding to the identifier. Having received such a message, the system preferably checks whether the address given by the user exists or is invalid. If the address is not valid, the system preferably returns an error message to the user. If the system interprets that the address is valid, it preferably returns an acknowledgement message or confirmation to the user that the identifier has been specified, for example by the message "OK: THE IDENTIFIER HOME CORRESPONDS TO THE ADDRESS MANNERHEIMINTIE 67 B".

The system can preferably also include the name of the city in the acknowledgement message, in addition to the street address. This would prevent the error situation that could arise when there is a street with the same name in two cities, and the user has given only the street address in the definition. When the acknowledgement message also includes the city, the user can see if the order service system has not interpreted the definition in the way meant by the user, whereupon the user can send a new definition, in which the city is also mentioned in addition to the street address. If the user does not include the city in the definition, the location of the street address is preferably assumed to be the same city which the user specified when registering to the service.

The user can also remove identifiers in a similar manner, for example by the message "REMOVE HOME". In addition, the user can ask the system to show the identifiers that have already been defined. This can be done by the message "IDENTIFIERS", for example.

The messages and their contents were described above only by way of example, and it is obvious to a person skilled in the art that the messages can also be implemented in many other ways.

The user can also be connected to the taxi ordering system by means of an Internet page, a WAP page or the like. Then the terminal device used may be a computer, a PDA device or a mobile station supporting the WAP protocol, for example. In such an embodiment of the invention, the user writes the identifier of the desired destination in the form contained by the Internet page, WAP page or the like of the taxi ordering system. When the user notifies that the form has been filled in by clicking the button on the Internet page with the mouse of the computer system 22 or in some other way, the taxi ordering system receives the information filled on the form as an order message given by the user. The taxi ordering system can transmit an acknowledgement back to the user by returning to the user an Internet page, WAP page or the like, on which the acknowledgement information is presented.

Registering to the system and adding, editing and removing identifiers can also be advantageously implemented by means of an Internet page, a WAP page or the like. When the Internet page is used with a personal computer, writing identifiers is easier than with a mobile station due to the better keyboard. By means of the WAP technology, using the service with a mobile station can be made easier than with text messages. For example, for editing identifiers the system can send to the user a WAP page, which includes the information of all the identifiers specified by the user, whereby the user can browse the list of specified identifiers in the mobile station without having to memorize which identifiers he or she has specified. By means of the WAP technology, the selection of an identifier for sending an order message can also be implemented by a list or menu, which makes the service more user-friendly.

In some especially advantageous embodiments of the invention, the taxi ordering system returns the acknowledgement of a message sent by an Internet page, a WAP page or the like by other means, e.g. as a text message of the mobile communication system to the number of the mobile station specified by the user. A procedure like this is very suitable for implementing the registration of the user, because a procedure like this can also be used for authenticating the user in connection with the registration. In connection with the registration, the user is preferably given a password for editing the identifiers by means of the Internet or WAP pages or the like, to prevent unauthorized handling of the user's information by other people. When the acknowledgement message and with it also the password is returned as a text message to the user's mobile station, no other person can appear in the name of the user in the registration step, unless this other person also has the user's mobile station in use at the same time. Thus the authentication of the mobile communication system is also utilized in the authentication of the user.

In order to implement the above mentioned functionality, the system for ordering a taxi according to the invention comprises at least means 401 for receiving an order message, means 402 for separating the destination identifier from the received order message, a storage element 50 for storing the addresses corresponding to the identifiers and means 403 for retrieving the address corresponding to the identifier.

In a preferred embodiment of the invention, the system for ordering a taxi also comprises means 401 for receiving a registration message. These means can preferably be the same as the means by which order messages are received.

In a preferred embodiment of the invention, the system for ordering a taxi also comprises means 401 for receiving a message for defining an identifier. These means can preferably be the same as the means by which order messages are received. Furthermore, the system preferably comprises means 408 for storing the identifier and address information of the definition message mentioned above in a storage element 50. The system may preferably also comprise means 408 for checking the validity of the address information given in the definition message.

In a preferred embodiment of the invention, the system preferably also comprises means 404 for forwarding the address to the taxi communication system 60, 65, 70, 80.

In a preferred embodiment of the invention, the system for ordering a taxi also comprises means for producing the functionality needed for the taxi communication system. In an application like this, the system preferably comprises means 405 for forwarding the address to the taxis.

In a preferred embodiment of the invention, the system for ordering a taxi also comprises means 406 for receiving an acknowledgement from at least one taxi.

In a preferred embodiment of the invention, the system for ordering a taxi also comprises means 407 for sending an acknowledgement message to the sender of the order message.

In a preferred embodiment of the invention, the means 401 for receiving an order message comprise means for receiving an SMS message.

In a preferred embodiment of the invention, the means 401 for receiving an order message comprise means for receiving an e-mail message.

In a preferred embodiment of the invention, the means 401 for receiving an order message comprise means for receiving information filled in on a form on an Internet page.

### B. A SECOND SET OF PREFERRED EMBODIMENTS OF THE INVENTION

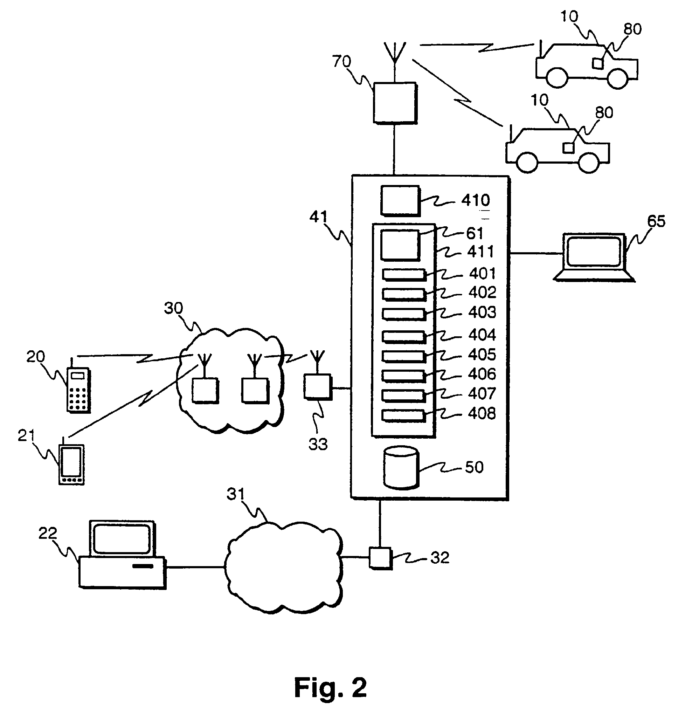

Fig. 2 illustrates the structure of a server according to a preferred embodiment of the invention. In this embodiment, the system according to the invention is implemented by means of one server unit 41. In this exemplary embodiment, the server 41 comprises the above described means 401, 402, 403, 404, 405, 406, 407 and 408 and the storage element 50. In this example, the server 41 also comprises means 61 for realizing the functionality of the control unit of the taxi communication system. Fig. 2 thus also illustrates such a preferred embodiment of the invention, in which the central unit of the taxi communication system and the taxi ordering system have been implemented by means of one unit.

The server 41 can preferably be implemented by means of a computer, which comprises a processor unit 410, a storage element 411, such as a RAM, and a mass storage element 50, such as a hard disk 50. In such an embodiment, the above described means 61, 401, 402, 403, 404, 405, 406, 407 and 408 are implemented by means of program components contained by the storage element, and these program components control the operation of the processor unit 410 for implementing the functionality described in this application.

Fig. 2 also illustrates various possibilities of connecting the system according to the invention to telecommunication systems 30, 31 to enable the exchange of messages between the user and the system. One possibility to connect the system according to the invention to a wireless telecommunication network 30 is to use a terminal device 33 of the wireless telecommunication network, such as - in the case of a GSM network - a component 33, which includes the functionality of a GSM mobile station. If the message transfer capacity of such a terminal device is not sufficient, the system according to the invention can be connected to the wireless telecommunication network 30 preferably by using a fixed connection to an element of the backbone network of the wireless telecommunication network. Fig. 2 also illustrates that the system according to the invention can be connected to the Internet network or the like by means of a modem 32 or other corresponding terminal device 32.

In order to implement the above mentioned functionality, the server unit according to the invention comprises at least means 401 for receiving an order message, means 402 for separating the destination identifier from the received order message, a storage element 50 for storing the addresses corresponding to the identifiers, and means 403 for finding the address corresponding to the identifier.

In a preferred embodiment of the invention, the server unit also comprises means 401 for receiving a registration message. These means can preferably be the same as the means by which order messages are received.

In a preferred embodiment of the invention, the server unit also comprises means 401 for receiving an identifier definition message. These means can preferably be the same as the means by which order messages are received. Furthermore, the server unit preferably comprises means 408 for storing the identifier and address information of the definition message mentioned above in the storage element 50. The server unit may preferably also comprise means 408 for checking the validity of the address information given in the definition message.

In a preferred embodiment of the invention, the server unit preferably also comprises means 404 for forwarding the address to the taxi communication system 60, 65, 70, 80.

### C. A THIRD SET OF PREFERRED EMBODIMENTS OF THE INVENTION

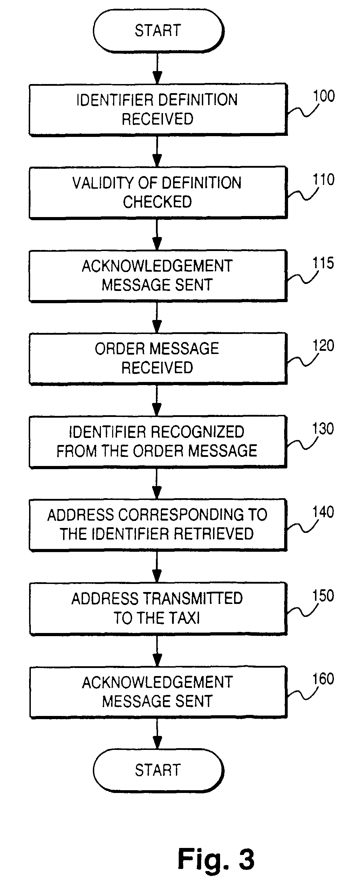

Figure 3 illustrates a method according to a preferred embodiment of the invention. This method can be used for the implementation of a taxi ordering service. The method according to this embodiment comprises at least steps in which
- the definition of the identifier is received 100,
- the validity of the definition is checked 110,
- the order message is received 120,
- the destination identifier is recognized from the order message 130,
- the address corresponding to the destination identifier is retrieved 140, and
- the identifier is forwarded to at least one taxi 150.

Preferably, the method also comprises a step 115, in which an acknowledgement message is sent to the sender of the identifier definition. In a preferred embodiment of the invention, the sender of the identifier definition is informed whether the definition was valid, and if it was, the street address and city according to the definition is also notified in the acknowledgement message.

Preferably, the method according to the invention also comprises a step 160, in which an acknowledgement message is sent to the sender of the order message. Then the sender of the order message knows that the order was accomplished. In a method according to a preferred embodiment of the invention, the identifier of the taxi, which answered the order message, is also notified to the sender of the order message.

If an address corresponding to the identifier is not found in step 140, according to a preferred embodiment of the invention, an error message is returned to the user, whereafter the user can send a new, corrected order.

The method according to the invention can also comprise other method steps than those listed above with reference to Fig. 3. For instance, the method according to the invention can also comprise other features of the invention described in this application.

### D. A FOURTH SET OF PREFERRED EMBODIMENTS OF THE INVENTION

Some embodiments of the invention concern program products, such as a program product stored on a storage medium. The storage medium can be any storage medium, such as a compact disc (CD), a diskette or any other mass storage medium, such as a hard disk or flash memory. The program product again may be a complete set of programs or e.g a subprogram library with the functionality of the invention, which can be used to implement the taxi ordering and management systems.

According to a preferred embodiment of the invention, the program product for the implementation of the taxi ordering system stored on a computer-readable medium comprises at least
- computer-readable program means (401) for receiving an order message,
- computer-readable program means (402) for separating the destination identifier from the received order message,
- computer-readable program means (403) for retrieving the address corresponding to the identifier,

The program product according to the invention can preferably also comprise computer-readable program means (401) for receiving a registration message.

The program product according to the invention can -preferably also comprise computer-readable program means (401) for receiving an identifier definition message.

The program product according to the invention can preferably also comprise computer-readable program means (408) for checking the validity of the address information given in the definition message.

The program product according to the invention can preferably also comprise computer-readable program means (404) for forwarding the address to the taxi communication system.

The program product according to the invention can preferably also comprise computer-readable program means (405) for forwarding the address to the taxis.

### E. OTHER FACTORS RELATED TO THE INVENTION

The invention provides many advantages. For example, the taxi ordering system according to the invention substantially reduces the time required for ordering a taxi. When using the taxi ordering system according to the invention, the orderer need not wait for an answer from the taxi centre on the telephone even in the busy times. The taxi ordering system according to the invention reduces the time from ordering a taxi to its arrival. In addition, the taxi ordering system according to the invention reduces the time needed for the reception of the order compared to many prior art solutions. By means of the taxi ordering system according to the invention, the taxi centre can transmit the orders more efficiently than in the prior art solutions.

The invention was described above with reference to some of its preferred embodiments, but it is clear that the invention can be modified in many ways according to the inventive idea defined by the attached claims. For example, in addition to the functionality according to the invention, other methods of ordering a taxi, such as an ordinary telephone order, can also be utilized in the taxi ordering system. The user can also advantageously order a taxi e.g. by sending the destination address instead of the destination identifier.

## Claims

1. A system for ordering a taxi, **characterized** in that it comprises at least
- a storage element (50) for saving addresses corresponding to destination identifiers,
- means (401) for receiving an identifier definition message,
- means (408) for storing into said storage element (50) an identifier and address information given in a received identifier definition message,
- means (401) for receiving an order message,
- means (402) for recognizing a destination identifier from a received order message,
and
- means (403) for retrieving, on the basis of the recognized destination identifier, an address into which an ordered taxi is to be directed.

2. A system according to Claim 1, **characterized** in that
it also comprises means (401) for receiving a registration message.

3. A system according to Claim 1, **characterized** in that
it also comprises means (408) for checking the validity of address information given in the received identifier definition message.

4. A system according to Claim 1, **characterized** in that
it also comprises means (404) for forwarding the retrieved address to a taxi communication system.

5. A system according to Claim 1, **characterized** in that it also comprises means (405) for forwarding the retrieved address to taxis.

6. A system according to Claim 5, **characterized** in that
it also comprises means (406) for receiving an acknowledgement from at least one taxi.

7. A system according to Claim 1, **characterized** in that
it also comprises means (407) for sending an acknowledgement message to the sender of the order message.

8. A system according to Claim 1, **characterized** in that
said means (401) for receiving an order message comprise means (401) for receiving an SMS message.

9. A system according to Claim 1, **characterized** in that
said means (401) for receiving an order message comprise means (401) for receiving an e-mail message.

10. A system according to Claim 1, **characterized** in that
said means (401) for receiving an order message comprise means (401) for receiving information filled in on a form on an Internet page.

11. A server unit for a taxi ordering system, **characterized** in that it
comprises at least
- a storage element (50) for storing addresses corresponding to destination identifiers,
- means (401) for receiving an identifier definition,
- means (408) for storing into said storage element (50) an identifier and address information given in a received identifier definition,
- means (401) for receiving an order,
- means (402) for recognizing a destination identifier from the received order, and
- means (403) for retrieving, on the basis of the recognized destination identifier, an address into which an ordered taxi is to be directed.

12. A server unit according to Claim 11, **characterized** in that
it also comprises means (401) for receiving a registration.

13. A server unit according to Claim 11, **characterized** in that
it also comprises means (404) for forwarding the retrieved address to a taxi communication system.

14. A server unit according to Claim 11,**characterized**in that
it also comprises means (408) for checking the validity of the address information given in the definition.

15. A method for handling information in a taxi ordering service, **characterized in** that it comprises at least steps, in which
- a definition of an identifier is received (100),
- an identifier and address information given in a received identifier definition are stored (100),
- an order is received (120),
- a destination identifier is recognized from the received order (130), and
- an address corresponding to the recognized destination identifier is retrieved (140) as an address into which an ordered taxi is to be directed.

16. A method according to Claim 15, **characterised** in that
it also comprises a step, in which the validity of a received definition is checked (110).

17. A method according to Claim 16, **characterized** in that
it also comprises a step (115), in which a definition acknowledgement is sent to the sender of the identifier definition.

18. A method according to Claim 17, **characterized** in that
the sender of the identifier definition is informed whether the definition was valid, and if it was, the street address and city according to the definition is also notified in the definition acknowledgement.

19. A method according to Claim 15, **characterised** in that
it also comprises a step, in which the retrieved address is forwarded to at least one taxi (150).

20. A method according to Claim 19, **characterized** in that
it also comprises a step (160), in which an order acknowledgement is sent to the sender of the order.

21. A method according to Claim 20, **characterized** in that
an identifier of a taxi, which answered to the forwarded retrieved address, is notified to the sender of the order in the order acknowledgement.

22. A program product stored in a computer-readable medium for the implementation of a taxi ordering system, **characterized** in that it comprises at least
- computer-readable program means (401) for receiving a definition of an identifier,
- computer-readable program means (401) for storing an identifier and address information given in a received identifier definition,
- computer-readable program means (401) for receiving an order,
- computer-readable program means (402) for recognizing a destination identifier from a received order, and
- computer-readable program means (403) for retrieving, corresponding to the recognized destination identifier, an address as the address into which an ordered taxi is to be directed.

23. A program product according to Claim 24, **characterized** in that
it also comprises computer-readable program means (401) for receiving a registration.

24. A program product according to Claim 22, **characterized** in that
it also comprises computer-readable program means (408) for checking the validity of address information given in a received identifier definition.

25. A program product according to Claim 22, **characterized** in that
it also comprises computer-readable program means (404) for forwarding the retrieved address to a taxi communication system.

26. A program product according to Claim 22, **characterized** in that
it also comprises computer-readable program means (405) for forwarding the retrieved address to taxis.
